# EUROPÄISCHE PATENTANMELDUNG

(11) **EP 1 400 384 A2**
(43) Veröffentlichungstag der Anmeldung: **24.03.2004**
(21) Anmeldenummer: 03018648.0
(22) Anmeldetag: 20.08.2003
(51) Int. Cl.: B60J 3/02

(54) **Sonnenschutz für ein Kraftfahrzeug**

(30) Priorität: 23.09.2002 DE 10244156
(71) Anmelder: ArvinMeritor GmbH, 63128 Dietzenbach (DE)
(72) Erfinder: Hattass, Rainer, 63584 Gründau (DE); Tobias, Christian, 60439 Frankfurt (DE)
(74) Vertreter: Sties, Jochen, Dipl.-Ing.

(57) **Zusammenfassung**

Es wird eine Baugruppe beschrieben, die aus einem Dachmodul für ein Kraftfahrzeug und einer Sonnenschutzeinrichtung besteht, mit mindestens einer Führung (26), die sich in Längsrichtung von hinten nach vorne erstreckt, einem Gehäuse (20), das am Dachmodul angebracht ist, einem ersten Sonnenschutz (22), der ausgehend von dem Gehäuse nach vorne verstellt werden kann und in der Führung (26) geführt ist, mindestens einer Kassette (24), die am vorderen Rand des ersten Sonnenschutzes (22) angebracht ist, und einem zweiten Sonnenschutz (28), der in der Kassette (24) aufgenommen ist.

## Beschreibung

Die Erfindung betrifft eine Baugruppe bestehend aus einem Dachmodul für ein Kraftfahrzeug und einer Sonnenschutzeinrichtung.

Es ist eine Vielzahl von verschiedenen Sonnenschutzeinrichtungen bekannt. Sie dienen insbesondere dazu, bei einem Dachmodul mit einem transparenten Abschnitt, beispielsweise einem Glas-Schiebedach, die Sonneneinstrahlung in den Innenraum des Fahrzeugs zu verringern.

In jüngster Zeit wurden Dachmodule entwickelt, die einen besonders großen transparenten Bereich aufweisen. So sind Dachmodule entwickelt worden, die eine Panoramascheibe aufweisen, die aus einem Windschutzscheibenabschnitt und einem Dachabschnitt bestehen, die ohne Holm oder Rahmen ineinander übergehen. Auf diese Weise läßt sich ein lichtdurchfluteter Innenraum mit sehr guter Rundumsicht verwirklichen. Allerdings stellt ein solches Dachmodul hohe Anforderungen an die Sonnenschutzeinrichtung, da eine ungehinderte Sonneneinstrahlung in den Innenraum des Fahrzeugs zu unangenehm hohen Temperaturen im Innenraum führen würde.

Die Erfindung schafft eine Sonnenschutzeinrichtung, mittels der in sehr flexibler Weise der Innenraum des Fahrzeugs in der gewünschten Weise abgeschattet werden kann. Erfindungsgemäß ist mindestens eine Führung vorgesehen, die sich in Längsrichtung von hinten nach vorne erstreckt, sowie ein Gehäuse, das am Dachmodul angebracht ist, ein erster Sonnenschutz, der ausgehend von dem Gehäuse nach vorne verstellt werden kann und in der Führung geführt ist, mindestens eine Kassette, die am vorderen Rand des ersten Sonnenschutzes angebracht ist, und ein zweiter Sonnenschutz, der in der Kassette aufgenommen ist. Der erste Sonnenschutz ermöglicht es, die Sonneneinstrahlung im Dachabschnitt der Panoramascheibe in der gewünschten Weise abzuschatten. Zusätzlich kann je nach Wunsch der zweite Sonnenschutz ausgefahren werden, was eine weitere Anpassung des Grades der Abschattung an die jeweiligen Wünsche ermöglicht.

Der erste Sonnenschutz kann insbesondere ein Rollo sein, das aus dem am Dachmodul angebrachten Gehäuse ausgezogen werden kann. Der zweite Sonnenschutz kann ebenfalls ein Rollo sein, das entlang der Windschutzscheibe nach unten gezogen wird, nachdem der erste Sonnenschutz nach vorne bis in den Bereich des Übergangs zwischen dem Dachabschnitt und dem Windschutzscheibenabschnitt gezogen wurde. Dabei kann der zweite Sonnenschutz zweiteilig ausgeführt werden, so daß der Fahrer und der Beifahrer den zweiten Sonnenschutz für sich jeweils individuell einstellen können.

Die Kassette für den zweiten Sonnenschutz kann am ersten Sonnenschutz schwenkbar angebracht sein, so daß sie nach Art einer Sonnenblende wirkt.

Die Erfindung wird nachfolgend anhand verschiedener Ausführungsformen beschrieben, die in den beigefügten Zeichnungen dargestellt sind. In diesen zeigen:
- Figur 1 in einer schematischen Seitenansicht ein Dachmodul mit daran angebrachter Sonnenschutzeinrichtung in einem Ausgangszustand;
- Figur 2 die Baugruppe von Figur 1 mit ausgefahrenem erstem Sonnenschutz;
- Figur 3 die Baugruppe von Figur 2 mit teilweise ausgefahrenem zweitem Sonnenschutz;
- Figur 4 die Baugruppe von Figur 2 mit vollständig ausgefahrenem zweitem Sonnenschutz;
- Figur 5 eine Baugruppe gemäß einer zweiten Ausführungsform mit ausgefahrenem erstem Sonnenschutz;
- Figur 6 die Baugruppe von Figur 5 mit ausgeklapptem zweitem Sonnenschutz; und
- Figur 7 die Baugruppe von Figur 6 mit vollständig ausgezogenem zweitem Sonnenschutz.

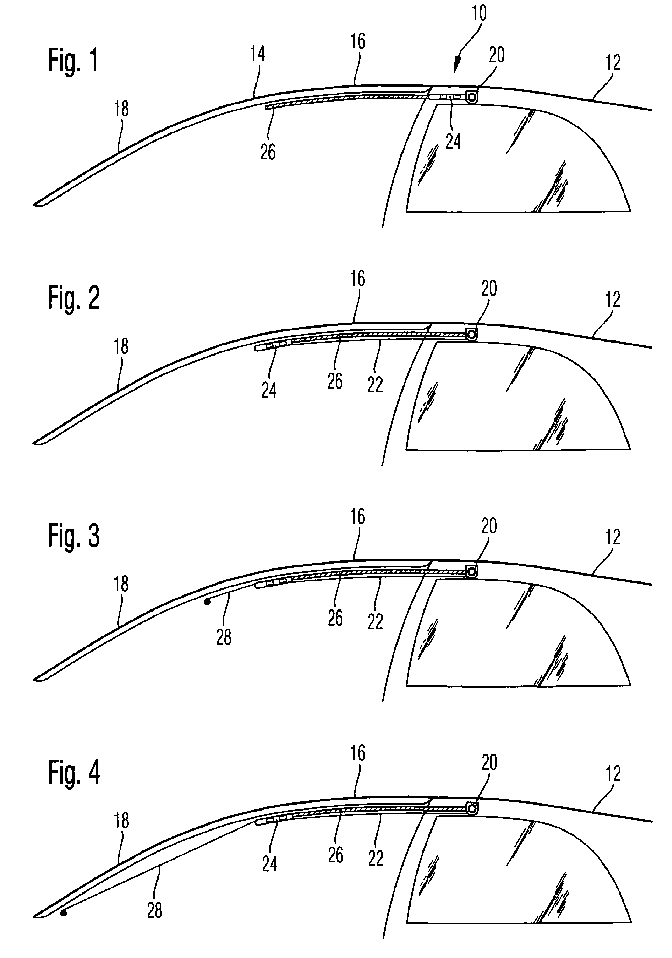

In Figur 1 ist ein Dachmodul 10 gezeigt, das einen hinteren Dachbereich 12 und eine Panoramascheibe 14 enthält, die den vorderen Dachbereich bildet. Die Panoramascheibe 14 kann aus Glas oder einem geeigneten Kunststoff bestehen und weist einen Dachabschnitt 16 auf, der sich an den hinteren Dachbereich 12 anschließt, sowie einen Windschutzscheibenabschnitt 18.

Am hinteren Dachbereich 12 kurz vor dem Beginn der Panoramascheibe 14 ist ein Gehäuse 20 angeordnet, in welchem ein erster Sonnenschutz 22 aufgenommen ist. Der erste Sonnenschutz 22 ist ein Rollo, das im Gehäuse 20 aufgewickelt ist. Am vorderen Rand des Rollos 22 ist eine Kassette 24 angebracht, die sich quer zur Längsrichtung des Fahrzeugs erstreckt. Die Kassette 24 ist auf beiden Seiten in einer Führung 26 geführt, die als Führungsschiene ausgestaltet ist. Die beiden Führungsschienen erstrecken sich parallel zueinander in der Längsrichtung des Fahrzeugs entlang den Seitenrändern des Dachmoduls, und zwar ausgehend vom Gehäuse 20 nach vorne bis hin zum Übergang vom Dachabschnitt 16 der Panoramascheibe 14 zum Windschutzscheibenabschnitt 18. In der Kassette 24 ist ein zweiter Sonnenschutz 28 aufgenommen, der hier ebenfalls als Rollo ausgebildet ist.

In Figur 1 ist die Sonnenschutzeinrichtung, die vom ersten Sonnenschutz 22 und vom zweiten Sonnenschutz 28 gebildet ist, im Ausgangszustand gezeigt, in dem der zweite Sonnenschutz 28 vollständig in der Kassette 24 aufgenommen ist und der erste Sonnenschutz 22 vollständig im Gehäuse 20 aufgenommen ist. Die Kassette 24 befindet sich somit außerhalb des lichtdurchlässigen Bereichs des Dachmoduls, der von der Panoramascheibe bestimmt ist.

In Figur 2 ist ein Zustand der Sonnenschutzeinrichtung gezeigt, in welcher die Kassette 24 bis zum vorderen Ende der Führung 26 nach vorne gezogen ist. Dabei wird der erste Sonnenschutz 22 aus dem Gehäuse 20 herausgezogen; er erstreckt sich also unterhalb des Dachabschnittes 16 der Panoramascheibe 14 zwischen der Kassette 24 und dem Gehäuse 20.

In Figur 3 ist ein Zustand der Sonnenschutzeinrichtung gezeigt, in welcher der zweite Sonnenschutz 28 teilweise aus der Kassette 24 herausgezogen ist. Der zweite Sonnenschutz 28 wirkt hier nach Art einer Sonnenblende.

In Figur 4 ist ein Zustand gezeigt, in welcher der zweite Sonnenschutz 28 vollständig aus der Kassette 24 herausgezogen ist. Der zweite Sonnenschutz 28 erstreckt sich somit entlang dem Windschutzscheibenabschnitt 18 der Panoramascheibe 14 und ist vorzugsweise am unteren Ende des Windschutzscheibenabschnittes 18 befestigt. Dieser Zustand ist insbesondere dann geeignet, wenn das Fahrzeug in der Sonne geparkt ist.

Die Kassette 24 kann aus zwei Teilabschnitten bestehen, so daß ein separater zweiter Sonnenschutz für den Fahrer und für den Beifahrer vorgesehen ist. Dies ermöglicht es, den Windschutzscheibenabschnitt 18 in unterschiedlicher Weise abzuschatten.

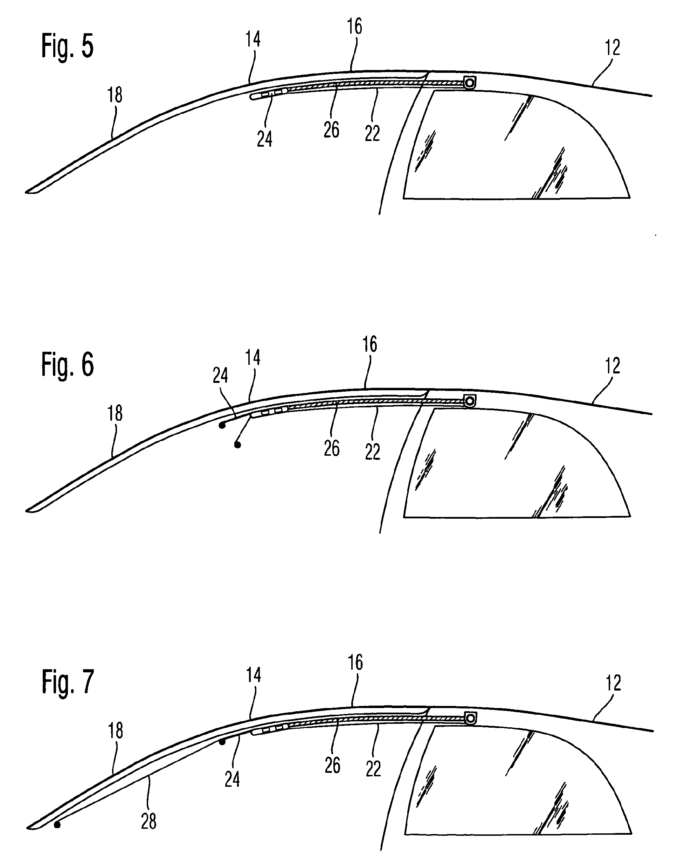

In den Figuren 5 bis 7 ist eine zweite Ausführungsform der Sonnenschutzeinrichtung gezeigt. Für die von der ersten Ausführungsform bekannten Bauelemente werden dieselben Bezugszeichen verwendet, und es wird insoweit auf die obigen Erläuterungen verwiesen.

Der Unterschied zur ersten Ausführungsform besteht darin, daß die Kassette 24 schwenkbar am vorderen Ende des ersten Sonnenschutzes 22 angebracht ist.

In Figur 5 ist die Kassette 24 zurückgeklappt am zweiten Sonnenschutz 22 gezeigt. In Figur 6 ist zu sehen, daß die Kassette 24 nach vorne hin zum Windschutzscheibenabschnitt 18 abgeklappt werden kann. Sie wirkt dann nach Art einer Sonnenblende. In Figur 7 ist zu sehen, daß aus der Kassette 24 der zweite Sonnenschutz 28 nach vorne herausgezogen werden kann, um den Windschutzscheibenabschnitt 18 vollständig abzudecken.

Bei beiden Ausführungsformen kann die Kassette 24 und damit der erste Sonnenschutz 22 entweder manuell oder mittels einer elektrischen Antriebsvorrichtung verstellt werden.

## Patentansprüche

1. Baugruppe bestehend aus einem Dachmodul für ein Kraftfahrzeug und einer Sonnenschutzeinrichtung, mit mindestens einer Führung (26), die sich in Längsrichtung von hinten nach vorne erstreckt, einem Gehäuse (20), das am Dachmodul angebracht ist, einem ersten Sonnenschutz (22), der ausgehend von dem Gehäuse nach vorne verstellt werden kann und in der Führung (26) geführt ist, mindestens einer Kassette (24), die am vorderen Rand des ersten Sonnenschutzes (22) angebracht ist, und einem zweiten Sonnenschutz (28), der in der Kassette (24) aufgenommen ist.

2. Baugruppe nach Anspruch 1, **dadurch gekennzeichnet, daß** der erste Sonnenschutz (22) ein Rollo ist.

3. Baugruppe nach Anspruch 1 oder Anspruch 2, **dadurch gekennzeichnet, daß** der zweite Sonnenschutz (28) ein Rollo ist.

4. Baugruppe nach Anspruch 1 oder Anspruch 2, daß der zweite Sonnenschutz (28) eine Sonnenblende ist.

5. Baugruppe nach einem der vorhergehenden Ansprüche, **dadurch gekennzeichnet, daß** ein Griff zum manuellen Verstellen des ersten Sonnenschutzes vorgesehen ist.

6. Baugruppe nach einem der Ansprüche 1 bis 4, **dadurch gekennzeichnet, daß** eine elektrische Antriebsvorrichtung für den ersten Sonnenschutz vorgesehen ist.

7. Baugruppe nach einem der vorhergehenden Ansprüche, **dadurch gekennzeichnet, daß** die Kassette (24) schwenkbar am ersten Sonnenschutz angebracht ist.

8. Baugruppe nach einem der vorhergehenden Ansprüche, **dadurch gekennzeichnet, daß** zwei separate Kassetten vorgesehen sind, von denen eine einen fahrerseitigen Sonnenschutz und die andere einen beifahrerseitigen Sonnenschutz aufnimmt.

9. Baugruppe nach Anspruch 8, **dadurch gekennzeichnet, daß** der fahrerseitige Sonnenschutz und der beifahrerseitige Sonnenschutz unabhängig voneinander betätigbar sind.

10. Baugruppe nach einem der vorhergehenden Ansprüche, **dadurch gekennzeichnet, daß** das Dachmodul eine Panoramascheibe (14) aufweist, die aus einem Windschutzscheibenabschnitt (18) und einem Dachabschnitt (16) bestehen, die ohne Holm oder Rahmen ineinander übergehen.
